(19) Europäisches Patentamt / European Patent Office / Office européen des brevets

(11) **EP 3 467 677 A1**

(12) **EUROPEAN PATENT APPLICATION**
published in accordance with Art. 153(4) EPC

(43) Date of publication:
**10.04.2019 Bulletin 2019/15**

(51) Int Cl.:
***G06F 17/30*** *(2006.01)*

(21) Application number: **17801940.2**

(22) Date of filing: **23.02.2017**

(86) International application number:
**PCT/CN2017/074585**

(87) International publication number:
**WO 2017/202086 (30.11.2017 Gazette 2017/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **23.05.2016 CN 201610346355**

(71) Applicant: **ZTE Corporation**
**Shenzhen, Guangdong 518057 (CN)**

(72) Inventor: **ZUO, Tao**
**Shenzhen, Guangdong 518057 (CN)**

(74) Representative: **Petit, Maxime et al**
**Ipsilon**
**Le Centralis**
**63, avenue du Général Leclerc**
**92340 Bourg-la-Reine (FR)**

(54) **IMAGE SCREENING METHOD AND DEVICE**

(57) The present disclosure provides an image screening method and an image screen device. The image screening method includes: detecting a trigger event; acquiring images in an image library under the trigger event, wherein the acquired images have a similarity larger than a first preset threshold with respect to a specific image, and are used as similar images of the specific image; and outputting the specific image and the similar images as an image group. With technical solutions of the present disclosure, similar images are processed accurately in time, solving a problem that a user spends a lot of time to screen similar images, resulting in that the similar images can be screened quickly and divided into groups accurately.

```
┌─────────────────────────────────────────────┐
│                                             │
│          detecting a trigger event          │ ⌇ S202
│                                             │
└─────────────────────────────────────────────┘
                      │
                      ▼
┌─────────────────────────────────────────────┐
│ acquiring images in an image library under  │
│ the trigger event, wherein the acquired     │ ⌇ S204
│ images have a similarity larger than a first│
│ preset threshold with respect to a specific │
│ image, and are used as similar images of    │
│ the specific image                          │
└─────────────────────────────────────────────┘
                      │
                      ▼
┌─────────────────────────────────────────────┐
│ outputting the specific image and the       │
│ similar images as an image group            │ ⌇ S206
└─────────────────────────────────────────────┘
```

Fig.2

## Description

## TECHNICAL FIELD

The present disclosure relates to the field of image processing, and particularly to an image screening method and an image screening device.

## BACKGROUND

In related technologies, a terminal (e.g., mobile phone) of a user generally stores a large number of images, and with an increasing of resolution, the images occupy a lot of storage space. In process of photographing, similar images are usually generated, for example, by continuously photographing or re-photographing. In order to retain good quality images and save storage space, the user needs to browse an image library for screening, and then delete some of the images.

If the user would delete some of the similar images, the entire library of images should be browsed, which would take a lot of time and energy. If the user would not delete the similar images, a lot of storage space would be occupied, and then when the user browses the image library, it would take more time of the use to skim over or delete the similar images.

There is no effective solution in related technologies to solve a problem that the user would spend a lot of time to screen similar images.

## SUMMARY

Embodiments of the present disclosure provides an image screening method and an image screening device to solve at least the problem that the user would spend a lot of time to screen similar images in related technologies.

An embodiment of the present disclosure provides an image screening method, including: detecting a trigger event; acquiring images in an image library under the trigger event, wherein the acquired images have a similarity larger than a first preset threshold with respect to a specific image, and are used as similar images of the specific image; and outputting the specific image and the similar images as an image group.

In some implementations, acquiring the images having a similarity larger than the first preset threshold with respect to the specific image includes: acquiring image features of all of images in the image library; and acquiring a geometric distance from the image feature of the specific image to the image feature of another image in the image library, and in a case where the geometric distance is less than a second preset threshold, determining the another image as an image having a similarity larger than the first preset threshold with respect to the specific image, and using the another image as the similar image of the specific image.

In some implementations, acquiring the image features of all of the images in the image library includes: acquiring semantic features and visual features of all of the images; and performing feature compression processing on the semantic features and the visual features by using a principal component analysis algorithm to acquire the image features of the images.

In some implementations, acquiring the semantic feature and the visual feature of the specific image includes: inputting the specific image to a deep convolution neural network model and outputting the semantic feature of the specific image; and extracting a color, a grey level co-occurrence matrix and seven invariant moment vectors of the specific image as the visual feature of the specific image.

In some implementations, the trigger event includes a signal for deleting redundant images.

In some implementations, the image screening method further includes: after outputting the image group, deleting one or more images in the image group in accordance with a preset rule.

In some implementations, deleting one or more images in the image group in accordance with the preset rule includes: upon receiving an instruction for deleting one or more images in the image group, deleting the one or more images in the image group.

In some implementations, the image screening method further includes: in a case where no instruction for deleting a redundant image in the image group is detected in a predetermined time period, emptying a list of similar images where the outputted image group is located.

An embodiment of the present disclosure further provides an image screening device, including: a detecting module, configured to detect a trigger event; an acquiring module, configured to acquire images in an image library under the trigger event, wherein the acquired images have a similarity larger than a first preset threshold with respect to a specific image, and are used as similar images of the specific image; and an output module, configured to output the specific image and the similar images as an image group.

In some implementations, the acquiring module includes: a first acquiring unit, configured to acquire image features of all of images in the image library; and a second acquiring unit, configured to acquire a geometric distance from the image feature of the specific image to the image feature of another image in the image library, and in a case where the geometric distance is less than a second preset threshold, determine the another image as an image having a similarity larger than the first preset threshold with respect to the specific image, and use the another image as the similar image of the specific image.

In some implementations, the first acquiring unit includes: a first acquiring sub-unit, configured to acquire semantic features and visual features of all of the images; and a compression sub-unit, configured to perform feature compression processing on the semantic features and the visual features by using a principal component analysis algorithm to acquire the image features of the images.

In some implementations, the first acquiring sub-unit is configured to input the specific image to a deep convolution neural network model and output the semantic feature of the specific image, and extract a color, a grey level co-occurrence matrix and seven invariant moment vectors of the specific image as the visual feature of the specific image.

In some implementations, the trigger event includes a signal for deleting a redundant image.

In some implementations, the image screening device further includes: a deleting module, configured to delete one or more images in the image group in accordance with a preset rule.

In some implementations, the deleting module is configured to delete one or more images in the image group upon receiving an instruction for deleting the one or more images in the image group.

In some implementations, in a case where no instruction for deleting a redundant image in the image group is detected in a predetermined time period, emptying a list of similar images where the outputted image group is located.

An embodiment of the present disclosure further provides a storage medium storing program codes for performing following steps: detecting a trigger event; acquiring images in an image library under the trigger event, wherein the acquired images have a similarity larger than a first preset threshold with respect to a specific image, and are used as similar images of the specific image; and outputting the specific image and the similar images as an image group.

With the present disclosure, upon detecting a trigger event (e.g., a signal for deleting redundant images), images having a similarity larger than a first preset threshold with respect to a specific image is selected from an image library as similar images, and the specific image and the similar images are outputted, that is, the similar images are individually stored as an entirety, which is equivalent to that the images in the image library are classified according to similarity, solving the problem that the user spends a lot of time to screen the similar images, resulting in that the similar images can be screened quickly and divided into groups accurately.

**BRIEF DESCRIPTION OF DRAWINGS**

Drawings are illustrated for better understanding the present disclosure, constitute a part of the present application. Embodiments of the present disclosure and descriptions thereof are provided for explaining the present disclosure, but not for limiting the present disclosure. In the drawings:

Fig. 1 shows a structural diagram of hardware of a mobile terminal implementing an image screening method in accordance with an embodiment of the present disclosure;

Fig. 2 shows a flowchart of an image screening method in accordance with an embodiment of the present disclosure;

Fig. 3 shows a structural diagram of an image screening device in accordance with an embodiment of the present disclosure;

Fig. 4 shows a structural diagram of an image screening device in accordance with an embodiment of the present disclosure;

Fig. 5 shows a structural diagram of an image screening device in accordance with an embodiment of the present disclosure;

Fig. 6 shows a structural diagram of an image screening device in accordance with an embodiment of the present disclosure;

Fig. 7 shows a flowchart of an image deleting method in accordance with an embodiment of the present disclosure;

Fig. 8 shows a structural diagram of an image deleting device in accordance with an embodiment of the present disclosure; and

Fig. 9 shows a flowchart of a multi-feature-based image deleting method in accordance with an embodiment of the present disclosure.

**DETAILED DESCRIPTION**

The present disclosure will be described in detail by referring to the drawings in conjunction with embodiments. It should be noted that, the embodiments and features of the embodiments may be combined arbitrarily without conflict.

It should be noted that, terms such as "first" and "second" in specification, claims and the drawings of the present application are used for distinguishing similar objects, but not indicating a specific order.

Embodiment 1

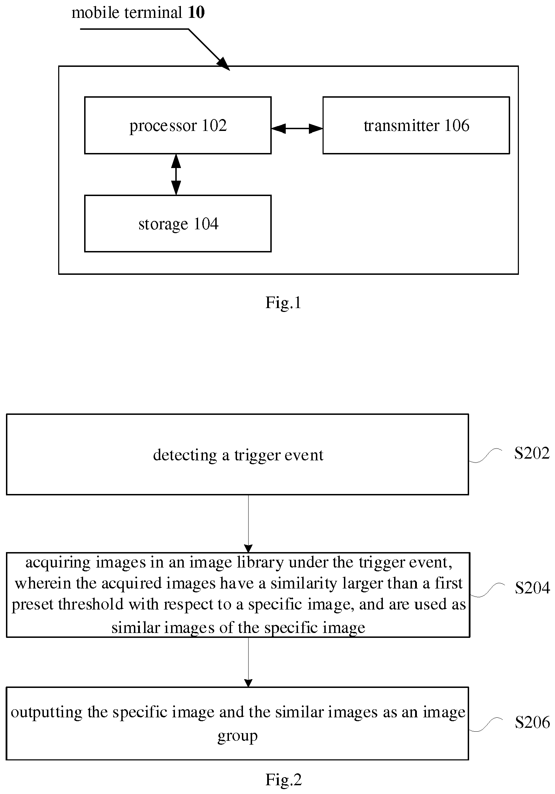

Methods provided by embodiments of the present application may be implemented in a computing device such as mobile terminal, camera, computer terminal or the like. By taking the mobile terminal as an example, Fig. 1 shows a structural diagram of hardware of a mobile terminal implementing an image screening method in accordance with an embodiment of the present disclosure. As shown in Fig. 1, the mobile terminal 10 may include at least one (only one is shown in the figure) processor 102, a storage 104 for storing data, and a transmitter 106 for communication function. The processor 102 may include but not limit to a processing device such as microcontroller unit (MCU), field programmable gate array (FPGA) or the like. It should be understood that, the structure shown in Fig. 1 is schematic, but not limited. For example, the mobile terminal 10 may include elements more or less than those shown in Fig. 1, or may include a configuration different from that shown in Fig. 1.

The storage 104 may store software programs or modules of applications, such as program instructions/modules corresponding to the image screening method in accordance with the embodiment of the present disclosure. The processor 102 performs various functions and data processing by executing the software programs or modules stored in the storage 104 to implement the image screening method in accordance with the embodiment of the present disclosure. The storage 104 may include a high speed random access memory, a non-volatile memory such as magnetic memory, flash memory, or other non-volatile solid state memory. In some implementations, the storage 104 may further include a storage remote to the processor 102, which may couple to the mobile terminal 10 through network. Examples of the network include but not limit to Internet, intranet, local area network (LAN), mobile communication network and a combination thereof.

The transmitter 106 is configured to transmitting a signal of a trigger event.

The present embodiment provides an image screening method implemented by the mobile terminal described above. Fig. 2 shows a flowchart of an image screening method in accordance with an embodiment of the present disclosure. As shown in Fig. 2, the image screening method includes following steps S202, S204 and S206.

At step S202, a trigger event is detected.

The trigger event may be of various forms. For example, the trigger event may be in a form that a user is browsing images having a particular feature in the terminal, or may be in a form that the user starts a progress of browsing images. In some implementations, the trigger event may also include a signal for deleting redundant images. That is, in a case where the signal for deleting the redundant images is detected (i.e., received), image screening is started.

At step S204, images having a similarity larger than a first preset threshold with respect to a specific image are acquired from an image library under the trigger event.

In some implementations, the images having a similarity larger than the first preset threshold with respect to the specific image may be acquired by: acquiring image features of all of images in the image library; and acquiring a geometric distance from the image feature of the specific image to the image feature of another image in the image library, and in a case where the geometric distance is less than a second preset threshold, determining the another image as an image having a similarity larger than the first preset threshold with respect to the specific image, and using the another image as the similar image of the specific image. Thus, it can be seen that, the geometric distance from the image feature of the specific image to the image feature of another image is inversely proportional to the similarity between the another image and the specific image, that is, the smaller the geometric distance from the image feature of the specific image to the image feature of another image is, the larger the similarity between the another image and the specific image is. The similarity as above may be acquired by a similarity calculating method in related technologies, such as vector space model algorithm and hash-based similarity calculating method. By taking an a calculating method of Euclidean distance in the vector space model algorithm as an example, the similarity between the another image and the specific image may be calculated by: acquiring coordinates of the feature of the another image, and by taking two dimensional coordinates as an example, obtaining an Euclidean distance between the feature of the another image and a mixture feature of the specific image according to a calculation formula of Euclidean distance

$$d = \sqrt{(x_1 - x_2)^2 + (y_1 - y_2)^2}$$

If the Euclidean distance is less than the second preset threshold, the similarity between the image and the specific image is determined to be high, and the image is outputted as a similar image of the specific image.

In some implementations, the image features of the images are acquired by: first, acquiring semantic features and visual features of the images. The semantic features may be extracted by using a deep convolution neural network model, in which five convolution layers and three full-connected layers constitute the network, and an output of the network is an abstract high-level feature for classifying images. A training set of the deep convolution neural network model may be an ImgNet data set. Training samples may be one million of remarked images, and the images may be divided into one thousand classifications. Parameters and a structure of the network may be those of a convolution neural network model in related technologies, which will not be repeated here. A distributed feature representation of data may be found by deep learning, that is, by combining low-level features to form an abstract high-level representation of attribute classification or features. A significant advantage of the deep learning is that a high-level feature can be abstracted for building a complex and high-performance model. By using a trained deep convolution neural network, the semantic features of the image can be extracted. The deep convolution neural network model may also be a deep convolution neural network recited in a literature "ImageNet Classification with Deep Convolutional Neural Networks".

The visual features of the images may be extracted by a method recited in "classification of natural images by using BP neural network". A dominant color, a grey level co-occurrence matrix and seven invariant moment vectors of each image may be extracted as low-level visual features of the image. In such extracting method, the image is evenly divided into five regions, and then a dominant color, a grey level co-occurrence matrix and seven invariant moment vectors of each region are extracted. Twenty-three dimensional eigenvectors are extracted for each region of the image, thus for the five regions, 115 dimensional eigenvectors are totally extracted. Low-level features are universal, thus may be used as a good complement to high-level features. High-level semantic features and low-level visual features may form a multi feature structure.

After acquiring semantic features and visual features of the images, a feature compression processing is performed by using a principal component analysis algorithm to form mixture features and image features of the images. Similarities between the images are calculated in accordance with the features, and similar images are outputted. By calculating the geometric distance between the mixture features of each image in the image library and the specific image, in a case where the geometric distance is less than the second preset threshold, the image is determined similar to the specific image, and then each of the image groups is outputted sequentially. In some implementations, the procedure of the feature compression processing by using the principal component analysis algorithm includes: assuming that there are P pieces of images, after the semantic feature and the visual feature of each image are extracted, P vectors are obtained; by the principal component analysis (PCA) algorithm, original n features are replaced with fewer m features, new features are linear combinations of original features, these linear combinations maximize a sample variance, to make the new m features as irrelevant as possible. The procedure of the principal component analysis (PCA) includes following four steps 1 through 4.

At step 1, features are centralized. That is, each dimensional data subtracts a mean value of the dimension. The "dimension" refers to a feature (or an attribute), after converting, the mean value of each dimension becomes zero. Assuming that an original matrix is A, by subtracts a mean value of each column from the column, a matrix B is obtained.

At step 2, a covariance matrix C is calculated for the matrix B.

At step 3, eigenvalues and eigenvectors of the covariance matrix C are calculated.

At step 4, the eigenvectors corresponding to relatively large eigenvalues are selected, thus a new data set is obtained.

After completing the above procedure, P dimension-reduced vectors are obtained.

By generating high-level features using the deep convolution neural network, classifications of images are analyzed, so as to ensure that images being similar to each other in classification are outputted. By using the low-level features, images being similar to each other in content are outputted for conforming human senses as much as possible. By using the principal component analysis, the high-level semantic features and the low-level visual features are merged, thus the dimensions are reduced, redundant features are reduced, the amount of computation is reduced, fast and stabilization requirements for offline computing are met.

At step S206 as shown in Fig. 2, the specific image and the similar images of the specific image are outputted as an image group.

In some implementations, these image are outputted into a list of similar images, and then receives an instruction for deleting a redundant image or any other operation signal from a user, in a case where no signal for deleting redundant images is received in a predetermined time period, the list of similar images is emptied for next use.

After outputting the image group at step S206, various applications such as browsing, deleting, and modifying may be applied to the image group. In some implementations, in order to save storage space of the terminal, at least one image in the image group may be deleted according to a preset rule. Specifically, the procedure of deleting the image may include but is not limited to: upon receiving an instruction for deleting one or more images in the image group, deleting the one or more images in the image group.

With the steps as above, first the trigger event is detected; under the trigger event, images having a similarity larger than the first preset threshold with respect to a specific image are acquired from the image library as similar images of the specific image; and the specific image and the similar images are outputted as an image group, thus the similar images can be processed accurately in time, solving the problem that the user spends a lot of time to screen the similar images, resulting in that the similar images can be screened quickly and divided into groups accurately.

In some implementations, the steps S202, S204 and S206 may be executed by a camera, a camcorder, a mobile terminal (e.g., mobile phone, a tablet computer) having an image acquisition function, or the like, but the present disclosure is not limited thereto.

From descriptions of implementations as above, it should be clearly understood by persons skilled in the art that methods in accordance with embodiments of the present disclosure may be implemented by software in combination with necessary common hardware platform, certainly, may be implemented by only hardware, but it is better to be implemented by software in combination with necessary common hardware platform. Based on such understanding, technical solutions of the present disclosure in substance or a part thereof contributing to related technologies may be embodied in a form of software product, the software product may be stored in a storage medium (e.g., ROM/RAM, magnetic disc, compact disc), and includes executable instructions which may be executed by a terminal device (e.g., mobile phone, computer, server or network equipment) to perform the methods in accordance with embodiments of the present disclosure.

Embodiment 2

The present embodiment provides an image screening device for implementing methods in accordance with the embodiments and the implementations as above, details that have been illustrated will not be repeatedly provided. As used below, the term "module" can implement a combination of software and/or hardware for achieving a predetermined function. Although it is better to implement the device of the embodiment described below by software, but it is conceivable to use hardware, or a combination of software and hardware.

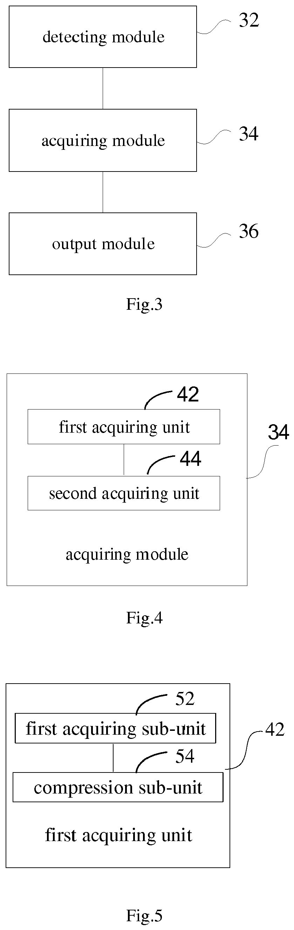

Fig. 3 shows a structural diagram of an image screening device in accordance with an embodiment of the present disclosure. As shown in Fig. 3, the image screening device includes: a detecting module 32, configured to detect a trigger event; an acquiring module 34, coupled to the detecting module 32, and configured to acquire images in an image library under the trigger event, wherein the acquired images have a similarity larger than a first preset threshold with respect to a specific image, and are used as similar images of the specific image; and an output module 36, coupled to the acquiring module 34, and configured to output the specific image and the similar images as an image group.

Fig. 4 shows another structural diagram of an image screening device in accordance with an embodiment of the present disclosure. As shown in Fig. 4, the acquiring module 34 includes: a first acquiring unit 42, configured to acquire image features of all of images in the image library; and a second acquiring unit 44, coupled to the first acquiring unit 42, and configured to acquire a geometric distance from the image feature of the specific image to the image feature of another image in the image library, and in a case where the geometric distance is less than a second preset threshold, determine the another image as an image having a similarity larger than the first preset threshold with respect to the specific image, and use the another image as the similar image of the specific image.

Fig. 5 shows further another structural diagram of an image screening device in accordance with an embodiment of the present disclosure. As shown in Fig. 5, the first acquiring unit 42 includes: a first acquiring sub-unit 52, configured to acquire semantic features and visual features of all of the images; and a compression sub-unit 54, coupled to the first acquiring sub-unit 52, and configured to perform feature compression processing on the semantic features and the visual features by using a principal component analysis algorithm to acquire the image features of the images.

In some implementations, the first acquiring sub-unit is configured to: input the specific image to a deep convolution neural network model and output the semantic feature of the specific image; and extract a color, a grey level co-occurrence matrix and seven invariant moment vectors of the specific image as the visual feature of the specific image.

In some implementations, the trigger event includes a signal for deleting redundant images.

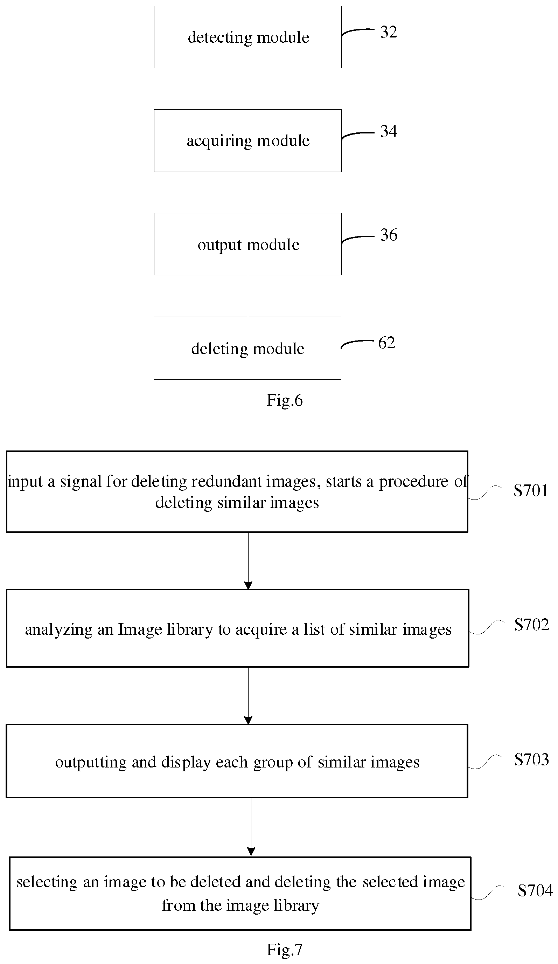

Fig. 6 shows still another structural diagram of an image screening device in accordance with an embodiment of the present disclosure. As shown in Fig. 6, the image screening device further includes: a deleting module 62, coupled to the output module 36, and configured to delete one or more images in the image group in accordance with a preset rule.

In some implementations, the deleting module 62 is configured to delete one or more images in the image group upon receiving an instruction for deleting the one or more images in the group.

In some implementations, in a case where no instruction for deleting a redundant image in the image group is detected in a predetermined time period, emptying a list of similar images where the image group is located.

It should be noted that, the modules as above may be implemented by software or hardware, for example, the modules as above may be implemented by a single processor, or may be implemented in various combinations in different processors.

Embodiment 3

The present embodiment provides an image deleting device. Fig. 7 shows a flowchart of an image deleting method in accordance with an embodiment of the present disclosure. As shown in Fig. 7, the image deleting method includes following steps S701 through S704.

At step S701, a user starts a procedure of deleting similar images, and transmits a signal for deleting redundant images (equivalent to the function of the detecting module 32 in the Embodiment 2).

At step S702, an image library is analyzed by a multi-feature-based similar image deleting method to acquire a list of similar images (equivalent to the function of the acquiring module 34 in the Embodiment 2).

At step S703, a group of similar images is outputted and displayed (equivalent to the function of the output module 36 in the Embodiment 2).

At step S704, the user selects one or more images to be deleted and deletes the selected image(s) from the image library, and if the user does not perform a deleting operation and cancels an input operation, the list of similar images is emptied for next use (equivalent to the function of the deleting module 62 in the Embodiment 2).

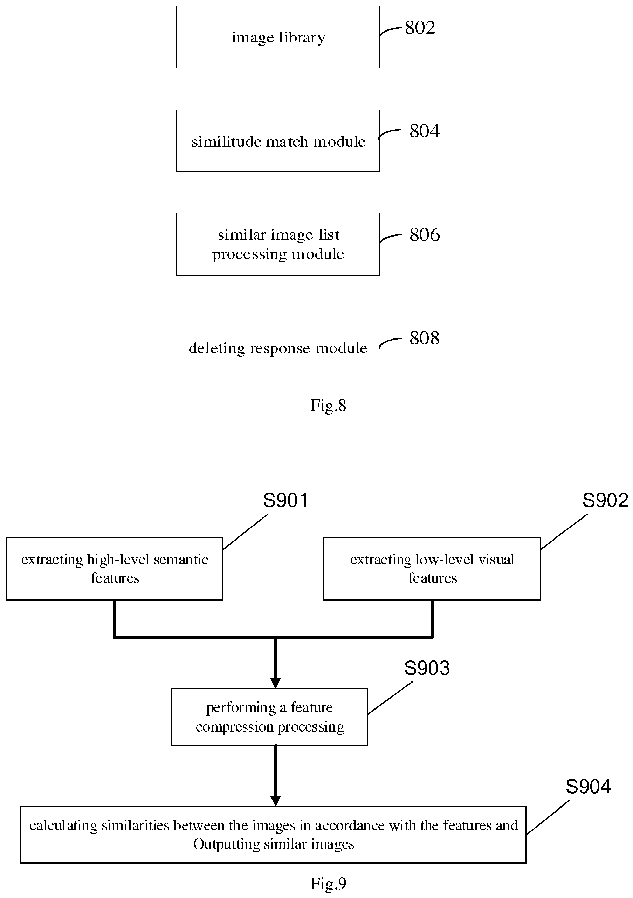

Fig. 8 shows a structural diagram of an image deleting device in accordance with an embodiment of the present disclosure. As shown in Fig. 8, the image deleting device may be used in a storage space cleaning system of a digital device, for looking up similar images in an image library, so as to improve a cleaning speed of a user and reduce a utilization ratio of the storage space. The image deleting device includes an image library 802, a similitude match module 804 coupled to the image library 802, a similar image list processing module 806 coupled to the similitude match module 804, and a deleting response module 808 coupled to the similar image list processing module 806.

The image library 802 (equivalent to the storage 104 in the Embodiment 1) is configured to receive and store images of a user.

The similitude match module 804 (equivalent to functions of the detecting module 32 and the acquiring module 34 in the Embodiment 2) is configured to receive the signal for deleting redundant images from the user, and by using the multi-feature-based similar image deleting method, analyze similar images in the image library 802, and transmit the similar images to the similar image list processing module 806.

The similar image list processing module 806 (equivalent to the function of the output module 36 in the Embodiment 2) is configured to receive the similar images and output images in groups, each of which includes images similar to each other.

The deleting response module 808 (equivalent to the function of the deleting module 62 in the Embodiment 2) is configured to receive the signal for deleting one or more images, which is transmitted after the user selects the similar image(s) to be deleted, and delete a corresponding image(s) from the image library.

Embodiment 4

Fig. 9 shows a flowchart of a multi-feature-based image deleting method in accordance with an embodiment of the present disclosure. As shown in Fig. 9, the multi-feature-based image deleting method includes following steps S901 through S904.

At step S901, high-level semantic features are extracted by using the deep convolution neural network recited in the literature "ImageNet Classification with Deep Convolutional Neural Networks". Five convolution layers and three full-connected layers constitute the network, and an output of the network is an abstract high-level feature for classifying images. A training set of the deep convolution neural network may be an ImgNet data set. Training samples may be one million of remarked images, and the images may be divided into one thousand classifications. Parameters and a structure of the network may be the same as those in the literature.

At step S902, low-level visual features are extracted by the method recited in "classification of natural images by using BP neural network". A dominant color, a grey level co-occurrence matrix and seven invariant moment vectors of each image may be extracted as the low-level visual features of the image. In such extracting method, the image is evenly divided into five regions, and then a dominant color, a grey level co-occurrence matrix and seven invariant moment vectors of each region are extracted. Twenty-three dimensional eigenvectors are extracted for each region of the image, thus for the five regions, 115 dimensional eigenvectors are totally extracted.

At step S903, a feature compression processing is performed on the high-level semantic features and the low-level visual features by using a principal component analysis algorithm to form mixture features, so as to reduce the dimensions of features and reduce redundant features.

At step S904, similarities between the images are calculated in accordance with the features and similar images are outputted, by calculating the geometric distance between the mixture features between each image in the image library and the specific image, in a case where the geometric distance is less than a threshold, the image is determined as similar to the specific image, and then groups of similar images are outputted sequentially.

Embodiment 5

An embodiment of the present disclosure provides a storage medium storing program codes to be executed to perform follows steps S1 through S3.

At S1, a trigger event is detected.

At S2, under the trigger event, images having a similarity larger than a first preset threshold with respect to a specific image are acquired from an image library, and used as similar images of the specific image.

At S3, the specific image and the similar image are outputted as an image group.

In some implementations, the storage medium includes but is not limited to various media capable of storing program codes, such as U-disk, read-only memory (ROM), random access memory (RAM), mobile hard disk, magnetic disk and compact disc.

In some implementations, a processor performs the methods of the embodiments as above according to the program codes stored in the storage medium.

The specific examples in the present embodiment may refer to the examples described in the above embodiments and implementations, thus will not be repeated here.

It should be understood by persons skilled in the art that, the modules or steps of the present disclosure may be implemented by a general computing device, they may be integrated in a single computing device, or may be distributed over a network consisting of a plurality of computing devices, and they may be provided by program codes executable by the computing device, thus they may be stored in a storage to be executed by the computing device. In some cases, the steps of the present disclosure may be performed in an order different from that described in the present disclosure, the modules or steps of the present application may be implemented as integrated circuit modules respectively, or a portion of the modules or steps of the present application may be implemented as a single integrated circuit module. The present disclosure is not limited to any particular combination of hardware and software.

The embodiments of the present application described above are exemplary, but the present disclosure is not limited thereto. A person of ordinary skill in the art can make various modifications and variants without departing from the principle of the present disclosure, any of these modifications and variants should considered falling into the protection scope of the present disclosure.

**INDUSTRIAL APPLICABILITY**

The present disclosure is suitable for the field of image processing, for solving the problem that the user spends a lot of time to screen similar images, resulting in that the similar images can be screened quickly and divided into groups accurately.

**Claims**

1. An image screening method, **characterized in that**, comprising:

   detecting a trigger event;
   acquiring images in an image library under the trigger event, wherein the acquired images have a similarity larger than a first preset threshold with respect to a specific image, and are used as similar images of the specific image; and
   outputting the specific image and the similar images as an image group.

2. The method of claim 1, wherein acquiring the images having a similarity larger than the first preset threshold with respect to the specific image comprises:

   acquiring image features of all of images in the image library; and
   acquiring a geometric distance from the image feature of the specific image to the image feature of another image in the image library, and in a case where the geometric distance is less than a second preset threshold, determining the another image as an image having a similarity larger than the first preset threshold with respect to the specific image, and using the another image as the similar image of the specific image.

3. The method of claim 2, wherein acquiring the image features of all of the images in the image library comprises:

   acquiring semantic features and visual features of all of the images; and
   performing feature compression processing on the semantic features and the visual features by using a principal component analysis algorithm to acquire the image features of the images.

4. The method of claim 3, wherein acquiring the semantic feature and the visual feature of the specific image comprises:

   inputting the specific image to a deep convolution neural network model and outputting the semantic feature of the specific image; and
   extracting a color, a grey level co-occurrence matrix and seven invariant moment vectors of the specific image as the visual feature of the specific image.

5. The method of any of claims 1 through 4, wherein the trigger event comprises: a signal for deleting redundant images.

6. The method of claim 5, further comprising:
   after outputting the image group, deleting one or more images in the image group in accordance with a preset rule.

7. The method of claim 6, wherein deleting one or more images in the image group in accordance with the preset rule comprises:
   upon receiving an instruction for deleting one or more images in the image group, deleting the one or more images in the image group.

8. The method of claim 5, further comprising:
   in a case where no instruction for deleting an redundant image in the image group is detected in a predetermined time period, emptying a list of similar images where the outputted image group is located.

9. An image screening device, **characterized in that**, comprising:

   a detecting module, configured to detect a trigger event;
   an acquiring module, configured to acquire images in an image library under the trigger event, wherein the acquired images have a similarity larger than a first preset threshold with respect to a specific image, and are used as similar images of the specific image; and
   an output module, configured to output the specific image and the similar images as an image group.

10. The image screening device of claim 9, wherein the acquiring module comprises:

    a first acquiring unit, configured to acquire image features of all of images in the image library; and
    a second acquiring unit, configured to acquire a geometric distance from the image feature of the specific image to the image feature of another image in the image library, and in a case where the geometric distance is less than a second preset threshold, determine the another image as an image having a similarity larger than the first preset threshold with respect to the specific image, and use the another image as the similar image of the specific image.

11. The image screening device of claim 10, wherein the first acquiring unit comprises:

a first acquiring sub-unit, configured to acquire semantic features and visual features of all of the images; and
a compression sub-unit, configured to perform feature compression processing on the semantic features and the visual features by using a principal component analysis algorithm to acquire the image features of the images.

12. The image screening device of claim 11, wherein the first acquiring sub-unit is configured to:

input the specific image to a deep convolution neural network model and output the semantic feature of the specific image; and
extract a color, a grey level co-occurrence matrix and seven invariant moment vectors of the specific image as the visual feature of the specific image.

13. The image screening device of any of claims 9 through 12, wherein the trigger event comprises: a signal for deleting redundant images.

14. The image screening device of claim 13, further comprising:
a deleting module, configured to delete one or more images in the image group in accordance with a preset rule.

mobile terminal **10**

```
┌─────────────────────────────────────────────────────────────┐
│                                                               │
│   ┌──────────────────────┐        ┌──────────────────────┐   │
│   │                      │        │                      │   │
│   │    processor 102     │◄─────► │   transmitter 106    │   │
│   │                      │        │                      │   │
│   └──────────────────────┘        └──────────────────────┘   │
│              ▲                                                │
│              │                                                │
│              ▼                                                │
│   ┌──────────────────────┐                                   │
│   │                      │                                   │
│   │     storage 104      │                                   │
│   │                      │                                   │
│   └──────────────────────┘                                   │
│                                                               │
└─────────────────────────────────────────────────────────────┘
```

Fig.1

```
┌─────────────────────────────────────────────────────────────┐
│                                                               │
│                 detecting a trigger event                     │        S202
│                                                               │
└─────────────────────────────────────────────────────────────┘
                              │
                              ▼
┌─────────────────────────────────────────────────────────────┐
│   acquiring images in an image library under the trigger event,│
│  wherein the acquired images have a similarity larger than a first│    S204
│  preset threshold with respect to a specific image, and are used as│
│             similar images of the specific image               │
└─────────────────────────────────────────────────────────────┘
                              │
                              ▼
┌─────────────────────────────────────────────────────────────┐
│ outputting the specific image and the similar images as an image│     S206
│                          group                                 │
└─────────────────────────────────────────────────────────────┘
```

Fig.2

detecting module — 32

acquiring module — 34

output module — 36

Fig.3

first acquiring unit — 42

second acquiring unit — 44

acquiring module — 34

Fig.4

first acquiring sub-unit — 52

compression sub-unit — 54

first acquiring unit — 42

Fig.5

detecting module — 32

acquiring module — 34

output module — 36

deleting module — 62

Fig.6

input a signal for deleting redundant images, starts a procedure of deleting similar images — S701

analyzing an Image library to acquire a list of similar images — S702

outputting and display each group of similar images — S703

selecting an image to be deleted and deleting the selected image from the image library — S704

Fig.7

| image library | 802 |

| similitude match module | 804 |

| similar image list processing module | 806 |

| deleting response module | 808 |

Fig.8

S901
extracting high-level semantic features

S902
extracting low-level visual features

S903
performing a feature compression processing

S904
calculating similarities between the images in accordance with the features and Outputting similar images

Fig.9

# INTERNATIONAL SEARCH REPORT

| International application No. |
|---|
| **PCT/CN2017/074585** |

### A. CLASSIFICATION OF SUBJECT MATTER

G06F 17/30 (2006.01) i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, CNKI, WPI, EPODOC: photo, picture, image, likeness, similarity, resemble, threshold, delete, distance, character, properties, redundanc+

### C. DOCUMENTS CONSIDERED TO BE RELEVANT

| Category* | Citation of document, with indication, where appropriate, of the relevant passages | Relevant to claim No. |
|---|---|---|
| X | CN 103838484 A (LENOVO (BEIJING) CO., LTD.), 04 June 2014 (04.06.2014), description, paragraphs [0038]-[0075] | 1, 5-9, 13-14 |
| Y | CN 103838484 A (LENOVO (BEIJING) CO., LTD.), 04 June 2014 (04.06.2014), description, paragraphs [0038]-[0075] | 2-4, 10-12 |
| Y | CN 104133917 A (BAIDU ONLINE NETWORK TECHNOLOGY (BEIJING) CO., LTD.), 05 November 2014 (05.11.2014), description, paragraphs [0066]-[0072] | 2-4, 10-12 |
| Y | CN 105260385 A (SHANGHAI FEIXUN COMMUNICATION CO., LTD.), 20 January 2016 (20.01.2016), description, paragraphs [0058]-[0072] | 3, 4, 11, 12 |
| A | CN 104991959 A (BEIJING JINGDONG SHANGKE INFORMATION TECHNOLOGY CO., LTD. et al.), 21 October 2015 (21.10.2015), the whole document | 1-14 |
| A | CN 103558996 A (GUANG DONG OPPO MOBILE TELECOMMUNICATIONS CO., LTD.), 05 February 2014 (05.02.2014), the whole document | 1-14 |

☒ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 April 2017 (27.04.2017) | **24 May 2017 (24.05.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **JIANG, Lingling** Telephone No.: (86-10) **61648096** |

Form PCT/ISA/210 (second sheet) (July 2009)

## INTERNATIONAL SEARCH REPORT

| International application No. |
| --- |
| **PCT/CN2017/074585** |

**C (Continuation).     DOCUMENTS CONSIDERED TO BE RELEVANT**

| Category* | Citation of document, with indication, where appropriate, of the relevant passages | Relevant to claim No. |
| --- | --- | --- |
| A | US 2005105803 A1 (RAY, L.A.), 19 May 2005 (19.05.2005), the whole document | 1-14 |

Form PCT/ISA/210 (continuation of second sheet) (July 2009)

## INTERNATIONAL SEARCH REPORT
### Information on patent family members

International application No.

**PCT/CN2017/074585**

| Patent Documents referred in the Report | Publication Date | Patent Family | Publication Date |
|---|---|---|---|
| CN 103838484 A | 04 June 2014 | None | |
| CN 104133917 A | 05 November 2014 | WO 2016023336 A1 | 18 February 2016 |
| CN 105260385 A | 20 January 2016 | None | |
| CN 104991959 A | 21 October 2015 | None | |
| CN 103558996 A | 05 February 2014 | None | |
| US 2005105803 A1 | 19 May 2005 | WO 2005052850 A1 | 09 June 2005 |
| | | JP 2007513413 A | 24 May 2007 |
| | | US 2008212851 A1 | 04 September 2008 |
| | | EP 1685521 A1 | 02 August 2006 |

Form PCT/ISA/210 (patent family annex) (July 2009)